# EUROPÄISCHE PATENTSCHRIFT

(11) **EP 0 801 097 B1**
(45) Veröffentlichungstag und Bekanntmachung des Hinweises auf die Patenterteilung: **02.05.2003**
(21) Anmeldenummer: 97100924.6
(22) Anmeldetag: 22.01.1997
(51) Int. Cl.: C08J 9/00, C08J 9/06

(54) **Verfahren zur Herstellung eines expandierten Kunststoff-Formteiles**
Process for producing an expanded molded plastic
Procédé de préparation d'objets expansés en matière plastique

(30) Priorität: 09.04.1996 DE 19614021
(43) Veröffentlichungstag der Anmeldung: 15.10.1997
(73) Patentinhaber: MAGNA EXTERIOR SYSTEMS GmbH, 63179 Obertshausen (DE)
(72) Erfinder: Petrakis, Jordanis, 51399 Burscheid (DE); Leenaerts, Torsten, 42285 Wuppertal (DE); Göpper, Uwe, 42283 Wuppertal (DE); Vollmer, Heinz, 42285 Wuppertal (DE); Kleinsimlinghaus, Heinz-Werner, 45239 Essen (DE)
(74) Vertreter: Wolf, Eckhard, Dr.-Ing.

(56) Entgegenhaltungen:
- EP-A- 0 040 934
- WO-A-88/08860
- DATABASE WPI Section Ch, Week 8721 Derwent Publications Ltd., London, GB; Class A18, AN 87-147605 XP002060228 & JP 62 085 908 A (DAINICHI NIPPON CABLES LTD) , 20.April 1987

## Beschreibung

Die Erfindung betrifft ein Verfahren zur Herstellung eines aus einem Thermoplast bestehenden Kunststoff-Formteiles gemäß den Merkmalen des Oberbegriffs des Anspruchs 1. Die Erfindung bezieht sich ferner auf ein Kunststoff-Formteil, hergestellt nach diesem Verfahren und auf ein Treibmittelbatch zur Herstellung derartiger Formteile.

Zur Herstellung von Kunststoff-Formteilen aus einem Thermoplast, etwa einem Polypropylen (PP) oder einem thermoplastischen Polyolefin (TPO), ist es bekannt, ein entsprechendes Granulat dieses Materials mittels einer Spritzgießmaschine zu plastifizieren und die erhitzte Formmasse in ein entsprechendes Formwerkzeug einzuspritzen. Nach Abkühlung und Erstarren des Formteiles wird dieses dann aus dem Formwerkzeug ausgestoßen.

Nachteilig bei diesem bekannten Verfahren ist es, daß die Formteile durch das hohe spezifische Gewicht konventioneller Füllstoffe, wie z.B. Talkum oder Mineralfasern, ein relativ hohes Gewicht besitzen, und daß insbesondere dünnwandige Formteile mit großen Wandstärkenänderungen häufig von außen sichtbare Einfallungen aufweisen. Diese Einfallungen sind auf den Volumenschwund durch die unterschiedlichen Abkühlungszeiten der Formteile an ihren äußeren Oberflächen und in ihrem Inneren zurückzuführen.

Zur Vermeidung derartiger Einfallungen und zur Reduzierung des Gewichtes der Formteile ist bereits vorgeschlagen worden, die Formteile aus schäumbaren Thermoplasten herzustellen. Hierzu wird in das jeweilige thermoplastische Material ein chemisches Treibmittel eingearbeitet, welches eine möglichst homogene Verteilung in dem Basispolymer aufweisen soll. Bei entsprechender Erwärmung zerfallen die Treibmittel unter Freisetzung von Gasen, wobei die Zersetzungstemperatur mit der Verarbeitungstemperatur des Basispolymers korrespondiert. Als Treibmittel können beispielsweise Azo-Verbindungen, N-Nitrosoverbindungen, Sulfonylhydrazide und Zubereitungen mit diesen verwendet werden.

Nachteilig bei diesem Verfahren ist vor allem, daß die Formteile nach Entnahme aus dem Spritzgießwerkzeug häufig schlierenförmige Oberflächenfehler aufweisen, die durch die bei dem Spritzgießprozeß der geschäumten Masse bis an die Formteiloberfläche reichenden Gasblasen verursacht werden.

Der Erfindung liegt die Aufgabe zugrunde, Formteile aus einem Thermoplast, vorzugsweise aus einem PP- oder TPO-Material, herzustellen, welche nach dem Formprozeß weder Einfallungen noch schlierenförmige Oberflächenfehler aufweisen. Ferner soll der Aufbau eines entsprechenden Formteiles und ein Treibmittelbatch zur Herstellung eines derartigen Formteiles angegeben werden.

Diese Aufgabe wird erfindungsgemäß durch die Merkmale der kennzeichnenden Teile der Ansprüche 1, 6 und 8 gelöst.

Weitere besonders vorteilhafte Ausgestaltungen der Erfindung offenbaren die Unteransprüche.

Das erfindungsgemäße Verfahren weist im wesentlichen folgende Vorteile gegenüber herkömmlichen Verfahren auf:
- Vermeidung von Einfallstellen bei langen, dünnwandigen Formteilen (Sichtteilen) mit großen Wandstärkenänderungen oder Verrippung.
- Größerer Freiheitsgrad bei der Festlegung der Teilegeometrie.
- Oberflächenqualitäten werden im Vergleich zu herkömmlichen Verfahren mit Treibmitteln nicht beeinträchtigt.
- Verkürzung der Zykluszeiten (reduzierter Nachdruckbedarf).
- Gewichtsvorteile (partielle Dichtereduzierung).
- verbesserte Fließfähigkeit gegenüber nicht modifizierten Basiswerkstoffen.
- Verbesserung der Dämmeigenschaften (durch partielle Schaumstruktur).
- Recycle- und Rückführbarkeit der Anguß- und Fehlerteile.

Die Erfindung beruht im wesentlichen auf dem Gedanken, dem Basispolymer nicht wie bei bekannten Verfahren ein Treibmittel direkt zuzumischen, sondern ein Treibmittelbatch zu verwenden, wobei als Trägermaterial ein bevorzugt hochvernetztes thermoplastisches Elastomer (TPE) dient, welches verträglich mit dem Basispolymer ist. Dadurch wird erreicht, daß sich in dem Basispolymer lediglich partielle Schaumstrukturen ausbilden.

Diese Schaumstrukturen bewirken einerseits eine Gewichtsreduzierung des Formteiles. Andererseits treten weder Einfallstellen noch schlierenförmige Fehler an der Oberfläche des Formteiles auf.

Bei der Verwendung von PP's oder TPO's als Basispolymer haben sich als Trägermaterialien für das Treibmittelbatch vor allem TE(EPDM-X+PP) [PP-Elastomerlegierung mit dynamisch (in-sito) vernetztem Elastomeranteil] und/oder TE(PEBBS) [Styrol-Ethylen/Butylen-Styrol-Triblockcopolymer] aber auch TE(PBBS+PP), TE(NBR-X+PP), TE(NR-X+PP) und/oder TE(IIR-X+PP) als vorteilhaft erwiesen.

Als Treibmittel kann ein handelsübliches Treibmittel verwendet werden, sofern die Zersetzungstemperatur etwa der Verarbeitungstemperatur des Basispolymers entspricht. Der Anteil des Treibmittels in dem Treibmittelbatch sollte in der Regel etwa zwischen 0,5 und 10 Gew% liegen.

Die entsprechenden Treibmittelbatche zur Herstellung der erfindungsgemäßen Kunststoff-Formteile bestehen daher aus TE(EPDM-X+PP), TE(PEBBS), TE(PBBS+PP), TE(NBR-X+PP), TE(NR-X+PP) und/oder TE(IIR-X+PP) sowie 0,5 bis 10 Gew% eines chemischen Treibmittels.

Besonders bewährt hat sich in der Praxis ein Treibmittelbatch, welches aus 70 Gew% TE(EPDM-X+PP), 25 Gew% TE (PEBBS) und 5 Gew% eines chemischen Treibmittels besteht.

Ein weiteres, in der Praxis bewährtes Treibmittelbatch setzt sich aus 63 Gew% TE(EPDM-X+PP), 15 Gew% TE(PEBBS), 10 Gew% Kreide und 2 Gew% eines chemischen Treibmittels bzw. einer Treibmittelzubereitung aus exothermen und/oder endothermen chemischen Treibmitteln zusammen.

Weitere Einzelheiten und Vorteile der Erfindung ergeben sich aus den folgenden anhand von Figuren erläuterten Ausführungsbeispielen. Es zeigen:
- Fig.1: schematisch die Herstellung des Treibmittelbatches sowie den sich anschließenden Spritzgießvorgang zur Herstellung eines Kunststoff-Formteiles und
- Fig.2: den Schnitt durch ein vergrößert dargestelltes Formteil, welches nach dem erfindungsgemäßen Verfahren hergestellt wurde.

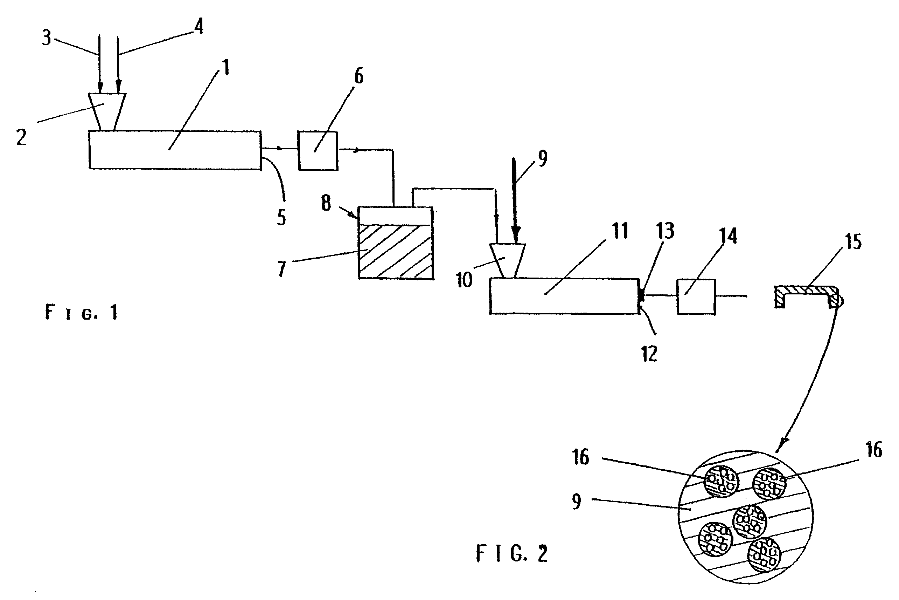

In Fig.1 ist mit 1 ein Compound-Extruder mit einem Beschikkungsaufsatz 2 bezeichnet. In den Beschickungsaufsatz 2, der als Mischer ausgebildet sein kann, werden sowohl eine vorgegebene Menge eines thermoplastischen Elastomers 3, vorzugsweise TE(EPDM-X+PP) und/oder TE(PEBBS), als auch eine vorgegebene Menge eines Treibmittels 4 oder Treibmittelzubereitung eingegeben. In dem Extruder 1 werden dann die Stoffe 3 und 4 gemischt, geknetet und erhitzt. Der am Ausgang 5 des Extruders 1 austretende Strang wird einem Granulator 6 zugeführt, der beispielsweise zylindrisches oder elliptisches Granulat 7 erzeugt. Anschließend wird das Granulat 7 in einen Vorratsbehälter 8 geschüttet.

Das Treibmittelbatch 7 kann nun in an sich bekannter Weise zur Herstellung eines Formteiles mit Hilfe einer Spritzgießmaschine verarbeitet werden. Hierbei bleibt die Partikel-Struktur des im Basispolymer verteilten Treibmittelbatsches wegen seiner materialbedingten hohen Elastizität, Zähigkeit und Viskosität trotz der hohen Scherkräfte im Formteil erhalten. Allerdings ist darauf zu achten, daß eine Überhomogenisierung des Treibmittelbatches durch extrem hohe Schmelztemperaturen vermieden werden muß.

Wie Fig.1 zu entnehmen ist, wird hierzu einerseits ein Basispolymer 9 und andererseits das Treibmittelbatch 7 über einen Beschickungsaufsatz 10 einer Spritzgießmaschine 11 zugeführt. Die am Ausgang 12 der Spritzgießmaschine 11 durch eine Düse 13 austretende Spritzgießmasse wird in ein entsprechendes Spritzgießwerkzeug 14 eingespritzt. Nach Abkühlung des Werkzeuges 14 wird dann das fertige Formteil 15 ausgestoßen.

In Fig.2 ist ein Schnitt durch das Formteil 15 schematisch dargestellt. Mit 9 ist dabei wiederum das Basispolymer und mit 16 sind die einzelnen aus dem entsprechenden TPE bestehenden Schaumstrukturbereiche bezeichnet. Wie Fig.2 zu entnehmen ist, ergeben sich relativ scharf abgegrenzte Strukturbereiche 16, die nur in Ausnahmefällen bis an die Oberfläche des Formteiles 15 reichen.

### Bezugszeichenliste

- 1: Compound-Extruder
- 2: Beschickungsaufsatz
- 3: TPE, Trägermaterial
- 4: Treibmittel
- 5: Ausgang
- 6: Granulator
- 7: Granulat, Treibmittelbatch
- 8: Vorratsbehälter
- 9: Basispolymer, Thermoplast
- 10: Beschickungsaufsatz
- 11: Spritzgießmaschine
- 12: Ausgang
- 13: Düse
- 14: Spritzgießwerkzeug
- 15: Formteil
- 16: Schaumstrukturbereiche

## Patentansprüche

1. Verfahren zur Herstellung eines aus einem Thermoplast bestehenden Kunststoff-Formteiles (15) mittels Extrusion oder Spritzgießens, **dadurch gekennzeichnet daß** während des Herstellungsverfahrens in das thermoplastische Basispolymer (9) 1-30 Gew% ein zusätzliches Polymercompound (Treibmittelbatch) (7) eingearbeitet wird, welches aus einem mit dem Basispolymer (9) verträglichen Trägermaterial (3), aus einem partiell hoch vernetzten thermoplastischen Elastomer (TPE) und in das Trägermaterial (3) homogen eingelagerten chemischen Treibmitteln besteht.

2. Verfahren nach Anspruch 1, **dadurch gekennzeichnet, daß** es sich bei dem Basispolymer (9) um ein Polypropylen (PP) oder ein Polyolefin (TPO) handelt.

3. Verfahren nach Anspruch 1 oder 2, **dadurch gekennzeichnet, daß** es sich bei dem Trägermaterial (3) des Treibmittelbatches um ein TE(EPDM-X+PP) und/oder ein TE(PEBBS) handelt.

4. Verfahren nach Anspruch 1 oder 2, **dadurch gekennzeichnet, daß** es sich bei dem Trägermaterial (3) des Treibmittelbatches um ein TE(PBBS+PP), TE(NBR-X+PP), TE(NR-X+PP) und/oder TE(IIR-X+PP) handelt.

5. Verfahren nach einem der Ansprüche 1 bis 4, **dadurch gekennzeichnet, daß** der Treibmittelanteil in dem Treibmittelbatch (7) zwischen 0,5 und 10 Gew% liegt.

6. Aus einem Thermoplast (TP) bestehendes Kunststoff-Formteil (15), **dadurch gekennzeichnet, daß** das Formteil (15) aus einem PP-Compound oder einem TPO-Basispolymer (9) besteht, welches in seinem Inneren Bereiche (16) aufweist, die aus geschäumten thermoplastischen Elastomeren (TPE) bestehen.

7. Kunststoff-Formteil nach Anspruch 6, **dadurch gekennzeichnet, daß** die Bereiche (16) aus geschäumten TE(EPDM-X+PP), TE(PEBBS), TE(PBBS+PP), TE(NBR-X+PP), TE(NR-X+PP) und/oder TE(IIR-X+PP) bestehen.

8. Treibmittelbatch zur Herstellung von Kunststoff-Formteilen, **dadurch gekennzeichnet, daß** das Treibmittelbatch aus TE(EPDM-X+PP), TE(PEBBS), TE(PBBS+PP), TE(NBR-X+PP), TE(NR-X+PP) und/oder TE(IIR-X+PP) sowie 0,5 bis 10 Gew% eines chemischen Treibmittels besteht.

9. Treibmittelbatch nach Anspruch 8, **dadurch gekennzeichnet, daß** das Treibmittelbatch aus 70 Gew% TE(EPDM-X+PP), 25 Gew% TE (PEBBS) und 5 Gew% eines chemischen Treibmittels besteht.

10. Treibmittelbatch nach Anspruch 8, **dadurch gekennzeichnet, daß** das Treibmittelbatch aus 63 Gew% TE(EPDM-X+PP), 15 Gew% TE(PEBBS), 10 Gew% Kreide und 2 Gew% eines chemischen Treibmittels -bzw. einer Treibmittelzubereitung aus exothermen und/oder endothermen chemischen Treibmitteln- besteht.

## Claims

1. A process for the production of a plastics moulding (15) consisting of a thermoplastic by extrusion or injection moulding, **characterised in that**, during the production process, 1-30 wt.% of an additional polymer composition (blowing agent masterbatch) (7) is incorporated into the thermoplastic base polymer (9), which polymer composition (7) consists of a matrix material (3), which is compatible with the base polymer (9) and consists of a partially highly crosslinked thermoplastic elastomer (TPE), and chemical blowing agents homogeneously incorporated into the matrix material (3).

2. A process according to claim 1, **characterised in that** the base polymer (9) is a polypropylene (PP) or a polyolefin (TPO).

3. A process according to claim 1 or 2, **characterised in that** the matrix material (3) of the blowing agent masterbatch is a TE(EPDM-X+PP) and/or a TE(PEBBS).

4. A process according to claim 1 or 2, **characterised in that** the matrix material (3) of the blowing agent masterbatch is a TE(PBBS+PP), TE(NBR-X+PP), TE(NR-X+PP) and/or TE(IIR-X+PP).

5. A process according to one of claims 1 to 4, **characterised in that** the blowing agent content in the blowing agent masterbatch (7) is between 0.5 and 10 wt.%.

6. A plastics moulding (15) consisting of a thermoplastic (TP), **characterised in that** the moulding (15) consists of a PP composition or a TPO base polymer. (9) which, within the interior thereof, comprises zones (16) which consist of foamed thermoplastic elastomers (TPE).

7. A plastics moulding according to claim 6, **characterised in that** the zones (16) consist of foamed TE(EPDM-X+PP), TE(PEBBS), TE(PBBS+PP), TE(NBR-X+PP), TE(NR-X+PP) and/or TE(IIR-X+PP).

8. A blowing agent masterbatch for the production of plastics mouldings, **characterised in that** the blowing agent masterbatch consists of TE(EPDM-X+PP), TE(PEBBS), TE(PBBS+PP), TE(NBR-X+PP), TE(NR-X+PP) and/or TE(IIR-X+PP) and 0.5 to 10 wt.% of a chemical blowing agent.

9. A blowing agent masterbatch according to claim 8, **characterised in that** the blowing agent masterbatch consists of 70 wt.% of TE(EPDM-X+PP), 25 wt.% of TE(PEBBS) and 5 wt.% of a chemical blowing agent.

10. A blowing agent masterbatch according to claim 8, **characterised in that** the blowing agent masterbatch consists of 63 wt.% of TE(EPDM-X+PP), 15 wt.% of TE(PEBBS), 10 wt.% of chalk and 2 wt.% of a chemical blowing agent or a blowing agent preparation of exothermic and/or endothermic chemical blowing agents.

## Revendications

1. Procédé de fabrication d'un objet moulé en matière plastique (15) composé d'un thermoplastique au moyen d'une extrusion ou d'une injection, **caractérisé en ce que**, pendant le procédé de fabrication, on introduit dans le polymère de base thermoplastique (9) 1 à 30 % en masse d'un composé polymère supplémentaire (mélange maître d'agent porogène) (7), lequel se compose d'un matériau de base ou de support (3) compatible avec le polymère de base (9), d'un élastomère thermoplastique partiellement fortement réticulé (TPE) et d'agents porogènes chimiques introduits de façon homogène dans le matériau de base ou de support (3).

2. Procédé selon la revendication 1, **caractérisé en ce qu'**il s'agit, concernant le polymère de base (9), d'un polypropylène (PP) ou d'une polyoléfine (TPO).

3. Procédé selon la revendication 1 ou 2, **caractérisé en ce qu'**il s'agit, concernant le matériau de base ou de support (3) du mélange maître d'agent porogène, d'un TE(EPDM-X+PP) et/ou d'un TE(PEBBS).

4. Procédé selon la revendication 1 ou 2, **caractérisé en ce qu'**il s'agit, concernant le matériau de base ou de support (3) du mélange maître d'agent porogène, d'un TE(PBBS+PP), d'un TE(NBR-X+PP), d'un TE(NR-X+PP) et/ou d'un TE(IIR-X+PP).

5. Procédé selon l'une des revendications 1 à 4, **caractérisé en ce que** la fraction d'agent porogène dans le mélange maître d'agent porogène (7) est comprise entre 0,5 et 10 % en masse.

6. Objet moulé en matière plastique (15) composé d'un thermoplastique (TP), **caractérisé en ce que** l'objet moulé (15) se compose d'un composite de PP ou d'un polymère de base de TPO (9) qui présente à l'intérieur des zones (16) qui se composent d'élastomères thermoplastiques expansés (TPE).

7. Objet moulé en matière plastique selon la revendication 6, **caractérisé en ce que** les zones (16) se composent de TE(EPDM-X+PP), de TE(PEBBS), de TE(PBBS+PP), de TE(NBR-X+PP), de TE(NR-X+PP) et/ou de TE(IIR-X+PP) expansé.

8. Mélange maître d'agent porogène destiné à fabriquer des objets moulés en matière plastique, **caractérisé en ce que** le mélange maître d'agent porogène se compose de TE(EPDM-X+PP), de TE(PEBBS), de TE(PBBS+PP), de TE(NBR-X+PP), de TE(NR-X+PP) et/ou de TE(IIR-X+PP), ainsi que de 0,5 à 10 % en masse d'un agent porogène chimique.

9. Mélange maître d'agent porogène selon la revendication 8, **caractérisé en ce que** le mélange maître d'agent porogène se compose de 70 % en masse de TE(EPDM-X+PP), de 25 % en masse de TE(PEBBS) et de 5 % en masse d'un agent porogène chimique.

10. Mélange maître d'agent porogène selon la revendication 8, **caractérisé en ce que** le mélange maître d'agent porogène se compose de 63 % en masse de TE(EPDM-X+PP), de 15 % en masse de TE(PEBBS), de 10 % en masse de craie et de 2 % en masse d'un agent porogène chimique ou d'une préparation d'agents porogènes composée d'agents porogènes chimiques exothermiques et/ou endothermiques.
